# EUROPÄISCHE PATENTANMELDUNG

(11) **EP 2 009 288 A2**
(43) Veröffentlichungstag der Anmeldung: **31.12.2008**
(21) Anmeldenummer: 08159096.0
(22) Anmeldetag: 26.06.2008
(51) Int. Cl.: F04D 25/04, F04D 29/70

(54) **Turbolader mit integriertem Separator**

(30) Priorität: 28.06.2007 DE 102007030277
(71) Anmelder: MANN+HUMMEL GmbH, 71638 Ludwigsburg (DE)
(72) Erfinder: Hilpert, Torsten, 71729, Erdmannhausen (DE)

(57) **Zusammenfassung**

Ein Verdichter im Ansaugtrakt einer Brennkraftmaschine weist ein mit einer Welle g e-koppeltes, in einer Verdichterkammer angeordnetes Verdichterrad auf. In den Verdichter ist ein Zentrifugalabscheider integriert, der in einer v on der Verdichterkammer separat ausgebildeten Zwischenkammer angeordnet und mit der Welle gekoppelt ist.

## Beschreibung

### Technisches Gebiet

Die Erfindung bezieht sich auf einen Verdichter im Ansaugtrakt einer Brennkraftmaschine nach dem Oberbegriff des Anspruches 1.

### Stand der Technik

Bekannt sind Abgasturbolader für Brennkraftmaschinen, die eine Abgasturbine im Abgasstrang der Brennkraftmaschine und einen Verdichter im Ansaugtrakt umfassen, wobei das Turbinenrad der Abgasturbine von den unter Druck stehenden Abgasen angetrieben wird und über eine Welle das Verdichterrad antreibt, woraufhin Verbrennungsluft auf einen erhöhten Druck verdichtet und den Zylindern der Brennkraftmaschine zugeführt wird. Die Kopplung zwischen Turbinenrad und Verdichterrad erfolgt über eine Welle, die in einem Gehäuse des Abgasturboladers drehbar gelagert ist.

Bekannt sind darüber hinaus aufgeladene Brennkraftmaschinen, die im Ansaugtrakt einen Kompressor aufweisen, der mechanisch unmittelbar von der Brennkraftmaschine angetrieben wird. Auch über den Kompressor wird eine Erhöhung des Ladedrucks der den Zylindern zuzuführenden Verbrennungsluft erreicht.

Von diesem Stand der Technik ausgehend liegt der Erfindung die Aufgabe zugrunde, einen Verdichter im Ansaugtrakt einer Brennkraftmaschine für weitere Anwendungszwecke nutzbar zu machen.
Offenbarung der Erfindung

Diese Aufgabe wird erfindungsgemäß mit den Merkmalen des Anspruches 1 gelöst. Die Unteransprüche geben zweckmäßige Weiterbildungen an.

Der erfindungsgemäße Verdichter sitzt im Ansaugtrakt einer Brennkraftmaschine und weist in einer Verdichterkammer ein Verdichterrad auf, das mit einer Welle gekoppelt ist, wobei die Welle von einer Antriebseinheit angetrieben ist. Erfindungsgemäß ist vorgesehen, dass ein Zentrifugalabscheider in den Verdichter integriert ist, der in einer von der Verdichterkammer separat ausgebildeten Zwischenkammer angeordnet und mit der Welle gekoppelt ist. Die Zwischenkammer weist eine Einströmöffnung für die Zufuhr von Abscheidegasen auf und kommuniziert über mindestens eine Verbindungsöffnung mit der Verdichterkammer.

Der wesentliche Vorteil der Erfindung liegt darin, dass in den Verdichter ein Abscheider für Flüssigkeit oder Öl, die bzw. das beispielsweise aus den Kurbelgehäusegasen stammt, integriert ist und die Abscheidegase gleichzeitig nach der Abscheidung der Flüssigkeit der Ansaugluft über den Verdichter zugeführt werden. Durch die Erfindung wird eine kompakte Einheit von Verdichter und Zentrifugalabscheider geschaffen. Der Zentrifugalabscheider weist auf Grund der hohen Drehzahl des Verdichters eine hohe Leistungsfähigkeit auf und ist entsprechend effektiv. Ein weiterer Vorteil ist darin zu sehen, dass insgesamt nur eine verhältnismäßig kleine Baueinheit für zwei unterschiedliche Funktionen erforderlich ist, was eine besonders wirtschaftliche Lösung darstellt. Der Abscheider kann gegebenenfalls in einen bestehenden Verdichter integriert werden.

Da der Zentrifugalabscheider in der separat ausgebildeten Zwischenkammer angeordnet ist, in die die Abscheidegase eingeleitet werden, besteht auch keine Gefahr, dass die Abscheidegase ungereinigt unmittelbar in den Verbrennungsluftstrom geleitet und den Zylindern zugeführt werden. Der Gasstrom der Abscheidegase kann vielmehr so gesteuert werden, dass die in die Zwischenkammer eingeleiteten Gase von dem rotierenden Zentrifugalabscheider in Rotation versetzt werden, woraufhin die in den Gasen enthaltenen Flüssigkeitströpfchen durch die Zentrifugalkraft nach außen geschleudert werden und sich an der Innenwandung der Zwischenkammer oder eines sonstigen, in der Zwischenkammer enthaltenen Bauteils absondern. Die abgesonderte Flüssigkeit kann gesammelt und über eine Flüssigkeitsaustrittsöffnung abgeleitet werden. Die Absonderung der Flüssigkeitströpfchen erfolgt hierbei vorzugsweise innerhalb der Zwischenkammer mit dem Zentrifugalabscheider, so dass sicher gewährleistet ist, dass nur der gereinigte Gasstrom über die Verbindungsöffnung in die Verdichterkammer mit dem dort angeordneten Verdichterrad gelangt.

In einer zweckmäßigen Ausführung ist die Zwischenkammer über die Verbindungsöffnung mit der Ansaugseite des Verdichterrades verbunden, so dass der dort herrschende, vom Verdichterrad ausgeübte Sog bzw. Unterdruck für die Überströmung der gereinigten Gase von der Zwischenkammer in die Verdichterkammer ausgenutzt werden kann. Grundsätzlich ist aber auch eine Überströmung an anderen Positionen möglich, so lange gewährleistet ist, dass auf Grund des vom rotierenden Zentrifugalabscheider erzeugten Druckaufbaus ein Druckgefälle zur Verdichterkammer besteht, der die Überströmung der gereinigten Gase über die Verbindungsöffnung ermöglicht. Beispielsweise kann die Verbindungsöffnung, welche vorzugsweise in eine Wandung der Zwischenkammer eingebracht ist, in einen Verbindungskanal führen, der verdichterseitig entweder in den Zufuhrkanal zum Verdichterrad oder in einen Diffusor einmündet, über den die vom Verdichterrad komprimierte Verbrennungsluft in Richtung der Brennkraftmaschine abgeleitet wird.

Gemäß einer weiteren vorteilhaften Ausführung sind die Verbindungsöffnung zwischen der Zwischenkammer und der Verdichterkammer und die Einströmöffnung, über die die Abscheidegase in die Zwischenkammer eingeführt werden, auf axial gegenüberliegenden Seiten des Zentrifugalabscheiders in den Wandungen der Zwischenkammer angeordnet. Über diese Anordnung wird der Druckunterschied auf den gegenüberliegenden Seiten des Zentrifugalabscheiders für die Einführung der Abscheidegase einerseits und die Ableitung der gereinigten Gase andererseits ausgenutzt. Hierbei ist es zweckmäßig, dass die Einströmöffnung in der Zwischenkammer auf der dem Verdichterrad abgewandten Seite des Zentrifugalabscheiders liegt, so dass die Einströmöffnung auf der Saugseite des Zentrifugalabscheiders und die Verbindungsöffnung zur Verdichterkammer auf der Druckseite liegt.

Des Weiteren kann es zweckmäßig sein, dass die Einströmöffnung radial in die Zwischenkammer einmündet und dass die Verbindungsöffnung sich in Achsrichtung erstreckt. Die radiale Position der Einströmöffnung erlaubt einen hindernisfreien Zugang zur Zwischenkammer mit Abstand zu den Bauteilen des Verdichters bzw. der Baueinheit, in die der Verdichter integriert ist. Die axiale Ausrichtung der Verbindungsöffnung zwischen Zwischenkammer und Verdichterkammer unterstützt die Abströmung auf der Druckseite des Zentrifugalabscheiders, wobei zugleich sichergestellt ist, dass auf Grund des radialen bzw. tangentialen Abschleuderns keine Flüssigkeitströpfchen über die axiale Verbindungsöffnung in die Verdichterkammer gelangen.

Um den Strömungsübertritt der gereinigten Gase von der Zwischenkammer in die Verdichterkammer zu unterstützen, können auf der Verdichterseite zusätzliche Schaufeln am Zentrifugalabscheider angeordnet sein, die für einen zusätzlichen Druckaufbau auf dieser Seite des Zentrifugalabscheiders sorgen und damit den Strömungsübertritt zur Verdichterkammer unterstützen. Vorteilhafterweise sind auch auf der dem Verdichterrad abgewandten Seite Schaufeln am Zentrifugalabscheider angeordnet, die in an sich bekannter Weise für die Luftrotation der zugeführten Gase sorgen.

Der Verdichter ist gemäß bevorzugter Ausführung Teil eines Abgasturboladers für eine Brennkraftmaschine, die neben dem Verdichter eine Abgasturbine umfasst, deren Turbinenrad im Abgasstrang von den unter Druck stehenden Abgasen der Brennkraftmaschine angetrieben wird. Die Abgasturbine stellt somit die Antriebseinheit für den Verdichter dar. Die Welle zwischen Turbinenrad und Verdichterrad ist zugleich Träger des Zentrifugalabscheiders, der axial zwischen Turbinen- und Verdichterrad in der Turbinenkammer angeordnet ist. Die Zwischenkammer befindet sich dementsprechend zwischen der Turbinenkammer und der Verdichterkammer, wobei die Wandungen der Zwischenkammer die jeweiligen Räume voneinander separieren. Turbinenrad, Verdichterrad und Zentrifugalabscheider sind vorzugsweise fest mit der Welle verbunden und weisen alle die gleiche Drehzahl auf.

Gemäß einer weiteren Ausführung ist der Verdichter als Kompressor ausgebildet, der mechanisch und/oder elektrisch angetrieben wird, wobei im Falle des mechanischen Antriebs eine Antriebsverbindung zur Kurbelwelle der Brennkraftmaschine bzw. einem von der Kurbelwelle anzutreibenden Bauteil geschaffen ist und im Falle einer elektrischen Verbindung ein die Welle des Verdichterrades antreibender Elektromotor vorgesehen ist. Die Verbindung zur Kurbelwelle bzw. der Elektromotor stellt in diesen Fällen die Antriebseinheit dar, über die das Verdichterrad und damit auch der Zentrifugalabscheider angetrieben werden. Die Zwischenkammer grenzt unmittelbar an die Verdichterkammer, diese beiden Kammern bilden eine gemeinsame Baueinheit bzw. ein gemeinsames Gehäuse.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 in schematischer Darstellung einen Turbolader mit implementiertem Ölabscheider, der als Zentrifugalabscheider ausgeführt ist,

Fig. 2 in einer Detaildarstellung einen als Zentrifugalabscheider ausgeführten Ölabscheider für einen Turbolader der in Fig. 1 dargestellten Art.

### Ausführungsformen der Erfindung

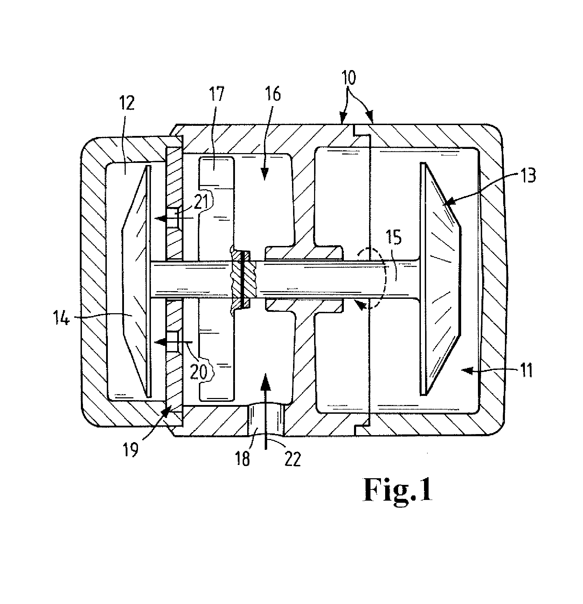

Der in Fig. 1 dargestellte Abgasturbolader weist ein Gehäuse 10 auf, das im Wesentlichen zwei Kammern 11 und 12 umfasst, wobei die Kammer 11 als Turbinenkammer zur Aufnahme eines Turbinenrades 13 und die Kammer 12 als Verdichterkammer zur Aufnahme eines Verdichterrades 14 ausgebildet ist. Turbinenrad 13 und Verdichterrad 14 sind über eine gemeinsame Welle 15 drehgekoppelt, die im Gehäuse 10 drehbar gelagert ist. Auf Grund der Drehkopplung weisen das Turbinenrad 13 und das Verdichterrad 14 beim Umlaufen der Welle 15 die gleiche Drehzahl auf.

Das Turbinenrad 13 befindet sich im Abgasstrang einer Brennkraftmaschine und wird von den unter Druck stehenden Gasen der Brennkraftmaschine angetrieben. Die Drehbewegung des Turbinenrades 13 wird über die Welle 15 auf das Verdichterrad 14 übertragen, das sich im Ansaugtrakt der Brennkraftmaschine befindet und Verbrennungsluft auf einen erhöhten Ladedruck verdichtet, unter dem die Verbrennungsluft zur Aufladung den Zylindern der Brennkraftmaschine zugeführt wird.

Zwischen der Turbinenkammer 11 und der Verdichterkammer 12 befindet sich eine Zwischenkammer 16, in der ein Zentrifugalabscheider 17 angeordnet ist, der auf der Welle 15 aufsitzt und mit dieser drehfest verbunden ist. Der Zentrifugalabscheider 17 rotiert daher synchron zum Turbinenrad 13 bzw. Verdichterrad 14. Die Zwischenkammer 16 bildet gemeinsam mit der Turbinenkammer 11 und der Verdichterkammer 12 das Gehäuse des Abgasturboladers, wobei sowohl eine einteilige Ausführung als auch eine mehrteilige Ausführung der Kammern in Betracht kommt.

Der Zentrifugalabscheider 17 dient zur Abscheidung von Öl- bzw. Flüssigkeitströpfchen in Blow-by-Gasen bzw. Kurbelgehäusegasen, die in die Zwischenkammer 16 eingeführt werden. Durch die Rotation des Zentrifugalabscheiders 17 wird das in der Zwischenkammer 16 befindliche Abscheidegas in Rotation versetzt, woraufhin die Flüssigkeitströpfchen durch Fliehkräfte radial bzw. tangential nach außen getragen werden und sich an der radialen Innenseite der Zwischenkammerwandung ablagern. Von dort ist ein Austrag gesammelter Flüssigkeitströpfchen möglich, beispielsweise über eine Öffnung 18, die in eine Wandung der Zwischenkammer eingebracht ist und radial in die Zwischenkammer mündet. Diese Öffnung 18 dient primär als Einströmöffnung für die Zufuhr von Abscheidegasen, sie kann ggf. aber auch zur Ableitung gesammelter Öltröpfchen genutzt werden. Grundsätzlich ist es aber auch möglich, über eine separate Öffnung die gesammelten Öltröpfchen abzuleiten.

Die radial über die Einströmöffnung 18 gemäß Pfeil 22 in die Zwischenkammer 16 eingeführten Abscheidegase werden nach der Reinigung axial über Verbindungsöffnungen 20 und 21, die sich in einer Trennwand 19 zwischen der Zwischenkammer 16 und der Verdichterkammer 12 befinden, abgeleitet. Die gereinigten Gase werden über ein Druckgefälle zwischen der der Trennwand 19 zugewandten Seite des Zentrifugalabscheiders 17 und der Verdichterkammer 12 in letztere eingeleitet, wo eine Durchmischung mit der dem Verdichterrad herangeführten Verbrennungsluft stattfindet und nach der Verdichtung eine Ableitung in Richtung der Zylinder der Brennkraftmaschine.

In die Trennwand der Zwischenkammer 16 zur Turbinenkammer 11 kann eine Lagerstelle für die drehbare Lagerung der Welle 15 eingebracht sein. Eine weitere Lagerstelle kann in die Trennwand 19 zwischen der Zwischenkammer 16 und der Verdichterkammer 12 eingebracht sein, die ebenfalls von der Welle 15 durchragt ist. In die Trennwandungen zwischen der Zwischenkammer und den beidseitig angrenzenden Kammern sind die Lagerstellen für die Welle 15 vorzugsweise druckdicht ausgebildet, um einen jeweiligen Gasübertritt über die Lagerstellen zu vermeiden.

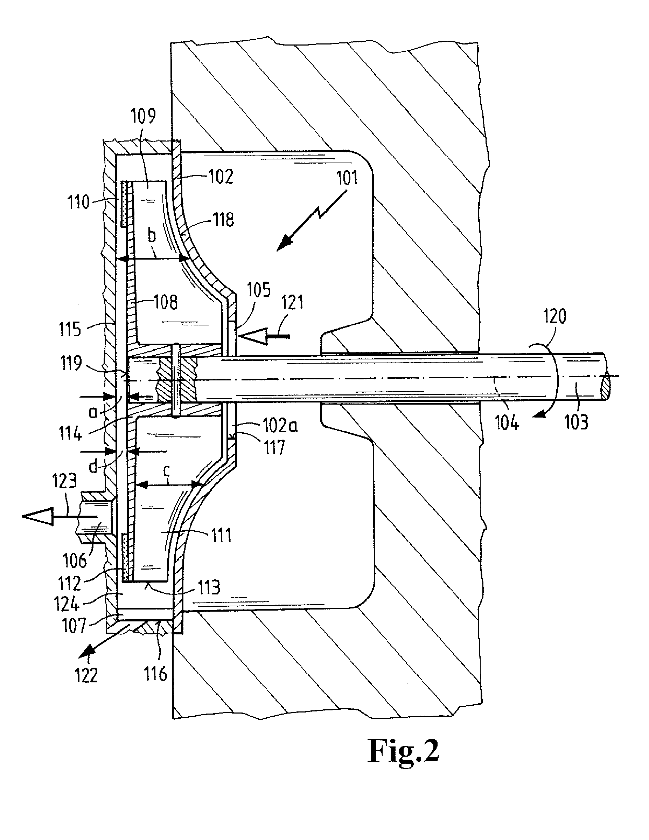

Der in Fig. 2 im Detail dargestellte Zentrifugalabscheider 1 kann vorteilhaft in einen Abgasturbolader gemäß Fig. 1 implementiert werden. Der in Fig. 2 dargestellte Zentrifugalabscheider 101 besitzt ein drehfest angeordnetes Gehäuse 102, bei dem es sich insbesondere um die Zwischenkammer handelt, welche zwischen Turbinenrad und Verdichterrad angeordnet ist. Das Gehäuse 102 kann ggf. auch am Zylinderkopf einer Brennkraftmaschine angeformt sein. Das Gehäuse 102 ist zumindest weitgehend rotationssymmetrisch zu einer Längsachse 104 einer Antriebswelle 103 ausgebildet, auf der der Zentrifugalabscheider 101 drehfest aufsitzt. Die Antriebswelle 103 ist insbesondere drehfest mit dem Verdichterrad und zweckmäßigerweise auch drehfest mit dem Turbinenrad verbunden.

In Betracht kommt aber auch eine Ausführung, bei der das Verdichterrad nicht von einem Turbinenrad, sondern von einer sonstigen Antriebseinheit angetrieben wird, beispielsweise von einem Elektromotor oder direkt bzw. indirekt von der Kurbelwelle der Brennkraftmaschine. In diesem Fall sitzen das Verdichterrad und der Zentrifugalabscheider 101 drehfest auf der Welle 103 auf, die in der besagten Weise von einer Antriebseinheit angetrieben wird.

Das Gehäuse 102 des Zentrifugalabscheiders 101 besitzt eine Vorderwand 118, die in Richtung auf die Längsachse 104 der Antriebswelle 103 aufgewölbt ist. In die Vorderwand 118 des Gehäuses 102 ist konzentrisch zur Längsachse 104 und zur Antriebswelle 103 eine vorzugsweise kreisförmig ausgebildete Öffnung 117 eingebracht, durch die die Antriebswelle 103 in das Gehäuse 102 einragt. Die Öffnung 117 weist einen größeren Durchmesser als die Antriebswelle 103 auf, so dass zwischen Außenmantel der Antriebswelle 103 und der die Öffnung 117 begrenzenden Wandung des Gehäuses 102 ein kreisförmiger Zwischenraum gebildet ist, der einen Gaseinlass 105 bildet. Der Gaseinlass 105 hat die Funktion einer Einströmöffnung, über die die ungereinigten Abscheidegase in die Zwischenkammer bzw. das Gehäuse 102 mit dem darin befindlichen Zentrifugalabscheider 101 eingeführt werden.

Innerhalb des Gehäuses 102 ist ein Laufrad 114, das im engeren Sinne den Zentrifugalabscheider bildet, drehfest mit der Antriebswelle 103 verbunden. Im Bereich des Wellenendes 119 ist am Laufrad 114 eine Rückwand 108 ausgebildet, die sich senkrecht zur Längsachse 104 der Antriebswelle 103 radial nach außen erstreckt und etwa scheibenförmig ausgebildet ist. Auf dem axialen Gaseinlass 105 zugewandten Seite 109 der Rückwand 108 weist das Laufrad 114 Schaufeln 111 auf, die sich insbesondere etwa parallel zur Längsachse 104 radial nach außen erstrecken und beim Umlauf der Antriebswelle 103 eine Zentrifugalströmung erzeugen. Auf der der Vorderwand 118 des Gehäuses 102 zugewandten Seite verlaufen die Schaufeln 111 vorzugsweise parallel zur Vorderwand 118. Die Dimensionen der Rückwand 108 und der Schaufeln 111 sind aneinander angepasst, derart, dass sich die Rückwand 108 etwa bis an den Außenumfang 113 der Schaufeln 111 erstreckt.

An der radial außen liegenden Innenwand 116 des Gehäuses 102 ist ein Ölauslass 107 angeordnet, der schlitzförmig ausgebildet ist und sich parallel zur Längsachse 104 der Antriebswelle 103 erstreckt. Zwischen der radial außen liegenden Innenwand des Gehäuses 102 und dem Außenumfang 113 der Schaufeln 111 ist ein Ringraum 124 gebildet.

In die Rückwand 115 des Gehäuses 102, die unmittelbar benachbart und parallel zur Rückwand 108 des Zentrifugalabscheiders 101 angeordnet ist, ist ein Gasauslass 106 eingebracht, der eine Verbindungsöffnung zwischen dem Gehäuseinneren des Gehäuses 102 und dem sich seitlich anschließenden Raum darstellt, bei dem es sich insbesondere um die Verdichterkammer mit dem darin angeordneten Verdichterrad handelt. Über den Gasauslass 106 werden die gereinigten Gase aus dem Inneren des Gehäuses 102 abgeleitet.

Auf der dem Gasauslass 106 zugewandten Seite 110 der Rückwand 108 des Zentrifugalabscheiders sind am Laufrad 114 Schaufeln 112 angeordnet, die zusätzlich zu den Schaufeln 111 angeordnet sind, wobei sich die Schaufeln 111 auf der der Antriebswelle 103 zugewandten Seite und die Schaufeln 112 auf der gegenüberliegenden Seite der Rückwand 108 befinden. Die Schaufeln 112 erstrecken sich in einem axial schmalen Bereich vom Außenumfang 113 der Schaufeln 111 radial nach innen.

Der Gasauslass 106 ist in Radialrichtung gesehen bezogen auf die Längsachse 104 innerhalb der Schaufeln 112 angeordnet und schließt insbesondere in radialer Richtung unmittelbar bzw. direkt an die Schaufeln 112 an. Gegenüber der Längsachse 103 der Antriebswelle 104 ist der Gasauslass 106 radial versetzt angeordnet.

Das Wellenende 119 der Antriebswelle 103 besitzt zur Rückwand 105 des Gehäuses 102, in die auch der Gasauslass 106 eingebracht ist, einen axialen Abstand a. Die Antriebwelle 103 mit dem Laufrad 114 ist im Gehäuse 102 berührungslos beweglich gehalten, insbesondere ohne Lagerung im Gehäuse 102. Die Breite b des Gehäuses 102 nimmt, parallel zur Längsachse 104 der Antriebswelle 103 gemessen, in einem Bereich zwischen dem Gaseinlass 105 und dem Außenumfang 113 der Schaufeln 111 radial nach außen hin ab. Der Abstand d zwischen der Rückwand 108 des Laufrades 114 und der Rückwand 115 des Gehäuses 102 ist dabei konstant, wohingegen der Abstand c zwischen der Rückwand 108 des Laufrades und der Vorderwand 118 des Gehäuses 102 in einem Bereich der Rückwand 108 radial nach außen abnimmt. Der Abstand c auf der dem Gaseinlass 105 zugewandten Seite ist jedoch an jeder Stelle größer als der Abstand d auf der dem Gasauslass 106 zugewandten Seite 110.

Im Betrieb des Zentrifugalabscheiders 101 rotiert die Antriebswelle 103 wie mit dem Pfeil 120 dargestellt um die Längsachse 104. Zu reinigendes Gas strömt in Richtung des Pfeils 121 axial in das Gehäuse 102 und in den Bereich des Laufrades 114 ein und wird durch die Rotation des Laufrades 114 radial bzw. tangential nach außen beschleunigt. Im Ringraum 124 zwischen dem Außenumfang 113 der Schaufeln 111 und der radial außen liegenden Innenwand 116 des Gehäuses 102 findet ein Druckaufbau im Gas statt. Dadurch wird Öl aus dem Gas abgetrennt und fließt durch den Ölauslass 107 in Richtung des Pfeils 122 aus dem Gehäuse 102 ab. Das gereinigte Gas strömt auf die dem Gasauslass 106 zugewandte Seite 110 der Rückwand 108 und von dort durch den axialen Gasauslass 106 in Richtung des Pfeils 123 aus dem Gehäuse 102 ab.

## Patentansprüche

1. Verdichter im Ansaugtrakt einer Brennkraftmaschine, mit einem mit einer Welle (15, 103) gekoppelten, in einer Verdichterkammer (12) angeordneten Verdichterrad (14), wobei die Welle (15, 103) von einer Antriebseinheit (13) angetrieben ist, **dadurch gekennzeichnet, dass** ein Zentrifugalabscheider (17, 101) in den Verdichter integriert ist, der in einer von der Verdichterkammer (12) separat ausgebildeten Zwischenkammer (16, 102) angeordnet und mit der Welle (15, 103) gekoppelt ist, wobei die Zwischenkammer (16, 102) eine Einströmöffnung (18, 105) für die Zufuhr von Abscheidegasen aufweist und über mindestens eine Verbindungsöffnung (20, 21, 106) mit der Verdichterkammer (12) kommuniziert.

2. Verdichter nach Anspruch 1, **dadurch gekennzeichnet, dass** die Zwischenkammer (16, 102) mit dem Zentrifugalabscheider (17, 101) über die Verbindungsöffnung (20, 21, 106) mit der Ansaugseite des Verdichterrades (14) verbunden ist.

3. Verdichter nach Anspruch 1 oder 2, **dadurch gekennzeichnet, dass** die Verbindungsöffnung (20, 21, 106) und die Einströmöffnung (18, 105) auf axial gegenüberliegenden Seiten des Zentrifugalabscheiders (17, 101) in die Wandungen der Zwischenkammer (16, 102) eingebracht sind.

4. Verdichter nach einem der Ansprüche 1 bis 3, **dadurch gekennzeichnet, dass** die Einströmöffnung (18, 105) in der Zwischenkammer (16, 102) auf der dem Verdichterrad (14) abgewandten Seite des Zentrifugalabscheiders (17, 101) liegt.

5. Verdichter nach einem der Ansprüche 1 bis 4, **dadurch gekennzeichnet, dass** die Einströmöffnung (18) radial in die Zwischenkammer (16) einmündet.

6. Verdichter nach einem der Ansprüche 1 bis 5, **dadurch gekennzeichnet, dass** der Zentrifugalabscheider (101) mit Schaufeln (111) versehen ist, die sich in Achs- und Radialrichtung von einer Rückwand (108) des Zentrifugalabscheiders (101) ausgehend auf der dem Verdichterrad (14) abgewandten Seite erstrecken.

7. Verdichter nach Anspruch 6, **dadurch gekennzeichnet, dass** auf der dem Verdichterrad (14) zugewandten Seite zusätzliche Schaufeln (112) am Zentrifugalabscheider (101) angeordnet sind.

8. Verdichter nach einem der Ansprüche 1 bis 7, **dadurch gekennzeichnet, dass** die Welle (15, 103) durch die Wandungen der Zwischenkammer (16, 102) geführt ist.

9. Abgasturbolader für eine Brennkraftmaschine, mit einem Verdichter nach einem der Ansprüche 1 bis 8 und mit einer Abgasturbine, deren Turbinenrad (13) im Abgasstrang von den Abgasen der Brennkraftmaschine anzutreiben ist, wobei die Drehbewegung des Turbinenrades (13) über die Welle (15) auf das Verdichterrad (14) übertragbar ist.

10. Abgasturbolader nach Anspruch 9, **dadurch gekennzeichnet, dass** die Zwischenkammer (16) mit dem Zentrifugalabscheider (17) zwischen der Verdichterkammer (12) und einer Turbinenkammer (11) zur Aufnahme des Turbinenrades (13) angeordnet ist.
